# EUROPEAN PATENT SPECIFICATION

(11) **EP 0 504 417 B1**
(45) Date of publication and mention of the grant of the patent: **04.01.1995**
(21) Application number: 91917060.5
(22) Date of filing: 07.10.1991
(51) Int. Cl.: G01B 5/00

(54) **AN INSTRUMENT FOR MEASURING DIMENSIONS OF A CAN SEAM PORTION**
GERÄT ZUM MESSEN DER ABMESSUNGEN EINES TEILES EINER FALZNAHT EINER BLECHDOSE
INSTRUMENT SERVANT A MESURER LES DIMENSIONS DU BOURRELET DE JOINTURE D'UNE BOITE DE CONSERVE

(30) Priority: 08.10.1990 JP 268524/90
(43) Date of publication of application: 23.09.1992
(73) Proprietor: THE COCA-COLA COMPANY, Atlanta, Georgia 30313 (US)
(72) Inventor: NAKAO, Saburo, 32-8, Minaminaruse 5-chome, Tokyo 194 (JP)
(74) Representative: Abitz, Walter, Dr.-Ing.
(86) International application number: PCT/JP91/01362
(87) International publication number: WO 92/06348

(56) References cited:
- GB-A- 2 205 404
- Patent Abstracts of Japan, vol. 13, no. 163 (M-816)(3511), 19 April 1989 & JP-A-64002744

## Description

### TECHNICAL FIELD

The present invention relates to an instrument for measuring dimensions of a seam portion between the body and the cap of a can which is used as a canning container of foodstuffs, etc.

### BACKGROUND ART

A can which is used as a canning container of foodstuffs, etc. is seamed after filling the contents in the can and seaming the cap to the body. A dimensional control of this seam operation is an important measure for judging the can seamability. A process control is necessary to ensure that cans poor in the seaming do not occur by regularly inspecting the seam portion of the cans after the completion of the seaming process.

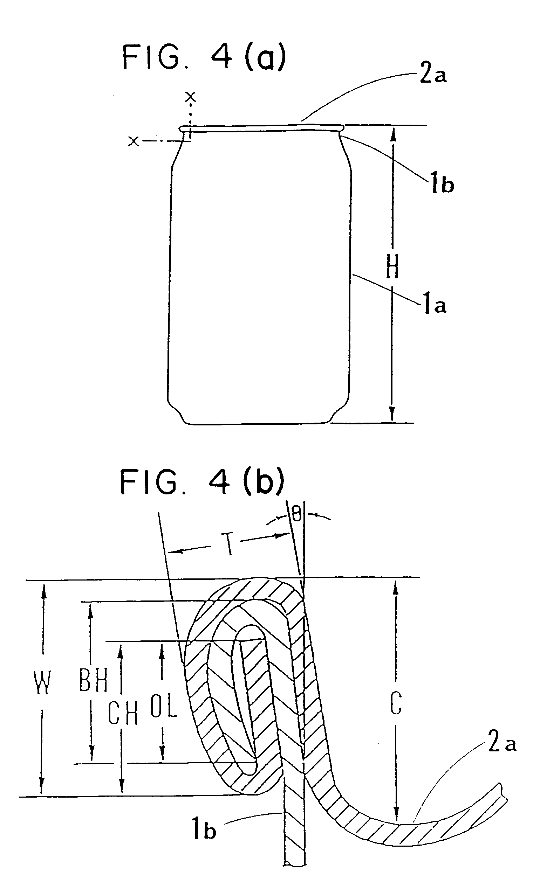

Figure 4-(a) is a view showing the seamed can body and cap. Figure 4-(b) is a view showing the section of a seam portion formed by seaming. This seam portion is formed by overlapping a body hook BH formed with edge lb of the neck portion of the can body rolled in and a cover hook CH formed with edge portion 2a of the can cap rolled in and pressing the overlap strongly. Usually, the seam portion slants outwardly at a micro-angle of O from an extension line of the can body according to the dismantling of a seaming tool, quality of the can, inner pressure of the can, etc.

An inspection is made from many aspects in order to judge about being good or poor in the seaming state of this seam portion. Usually, respective dimensions are measured about seaming thickness T, seaming width W, counter sink C, body hook BH, cover hook CH, overlap OL as shown in Figure 4-(b) and can height H as shown in Figure 4-(a). If seaming thickness T and seaming width W exceed any defined value among these measured values, poor seaming is likely to occur. Thus, these seaming thickness T and seaming width W are the most important spots to be measured.

The present invention is directed to an instrument for measuring exactly these seaming thickness T and seaming width W.

Hitherto, at the time of measuring seaming thickness T and seaming width W there has been generally adopted a method in which one takes a can and a micrometer for exclusive use by hand on the table and enters manually the measured value into a recording paper. However, this method has problems in that any skill is required to measure the seaming thickness T and seaming width W by maintaining an accurate measuring angle because the seamed portion is circular and slant; an indicator scale of the micrometer for exclusive use is small and difficult to read; and much time is required to record measured values.

While, as an equipment for automatically measuring these seamed portions have been contrived a measuring device of can seam dimensions as disclosed in Japanese Laid-Open Patent Publn. No. 63-108935 (GB-A-2205404), a method for inspecting cans as disclosed in Japanese Laid-Open Patent Publn. No. 64-2744, etc. These are excellent devices which are advanced in the labor-saving but have the following disadvantages because of their complex structure, i.e. much time is spent in exchanging a mold in accordance with the kind of cans and in confirming the measuring accuracy after the exchange of a mold; and the device used becomes large and requires a wide area at the time of installation.

The present invention is such as been made by considering the above problems and makes it an object to provide an instrument for measuring dimensions of a can seam which is so designed as to ensure an exact measurement by a simple operation.

A further object of the present invention is to provide a measuring instrument of a can seam portion which is so designed that an exact measuring accuracy can be reproduced by the quick mold exchange in response to measuring dimensions about different kinds of cans.

Other objects and merits of the present invention will be apparent from the following explanation.

### DISCLOSURE OF INVENTION

According to the present invention, there is provided the following measuring instrument in order to achieve the above objects, i.e. a measuring instrument enabling one to determine dimensions of a spot of the can to be measured through a simple operation by placing the can cap face or the can body face on the supporting block, an object for measurement while the spot of the can to be measured is held between the criterion measuring pin and measuring spindle of the measuring instrument.

In accordance with the present invention, the above problem can be dissolved by providing an instrument for measuring dimensions of a can seam portion, said device characterized by comprising a criterion measuring pin, a linear gauge provided with a measuring spindle which is so supported as to be movable along straight line L in the direction of approaching said criterion measuring pin and in the direction of leaving said criterion measuring pin, a can cap supporting block which holds the can such that the direction of measuring can seaming thickness T may be identical with the above straight line L and the inner face of the can seam portion may contact said criterion measuring pin, and a can body supporting block which holds the can such that the direction of measuring can seaming width W may be identical with the above straight line L and the lower face of the can seam portion may contact said criterion measuring pin.

### BRIEF DESCRIPTION OF DRAWINGS

Figure 1 is a side view of the instrument for measuring dimensions of a can seam portion conformable with any suitable working example of the present invention.

Figure 2 is a perspective view of the instrument for measuring dimensions of a can seam portion in Figure 1.

Figure 3-(a) and -(b) are each a side view taken when the can seam thickness and can seaming width are measured by the instrument for measuring dimensions of a can seam portion in Figure 1.

Figure 4-(a) is a side view of the seamed can. And Figure 4-(b) is a sectional view taken on line X-X in Figure 4-(a).

### BEST MODE FOR CARRYING OUT THE INVENTION

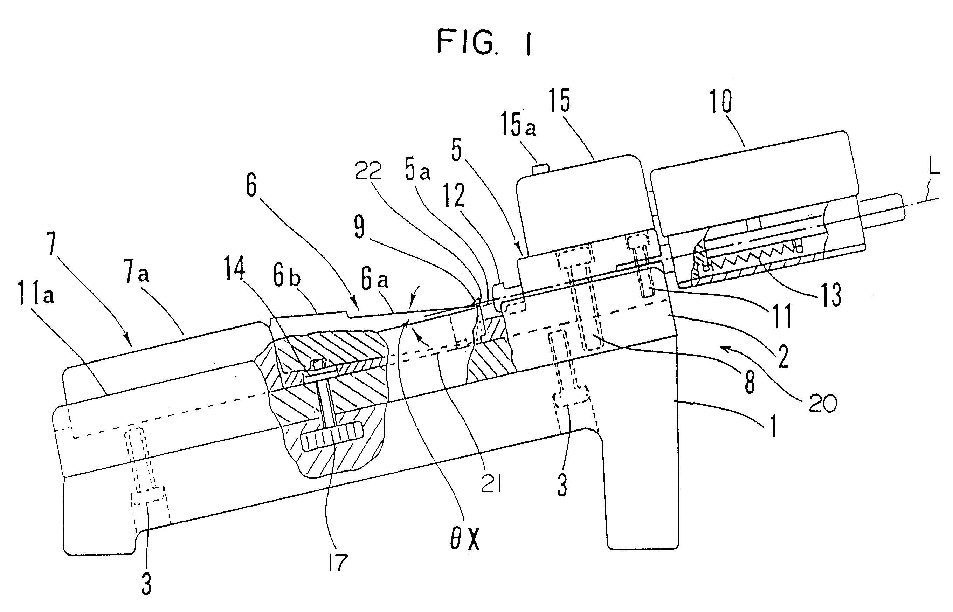

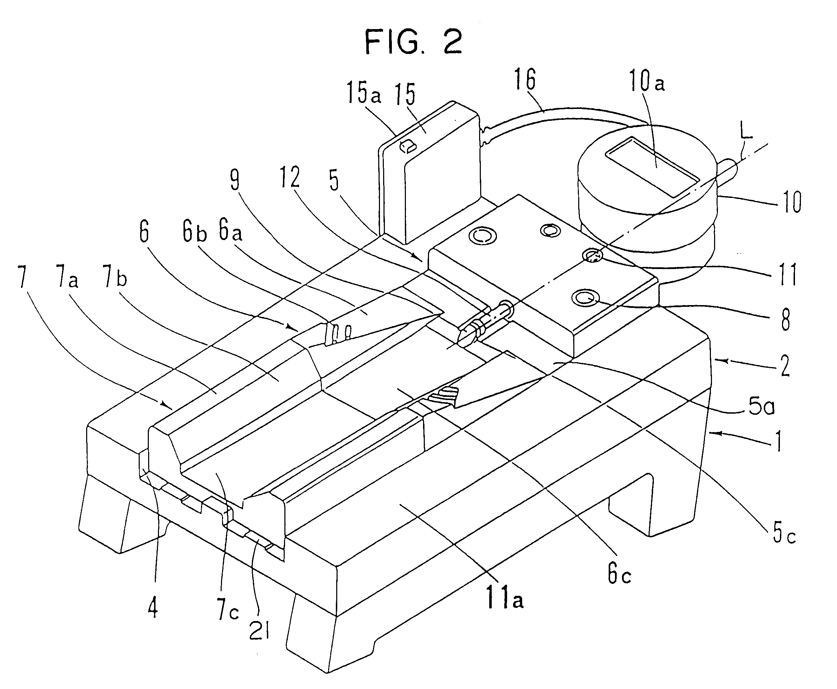

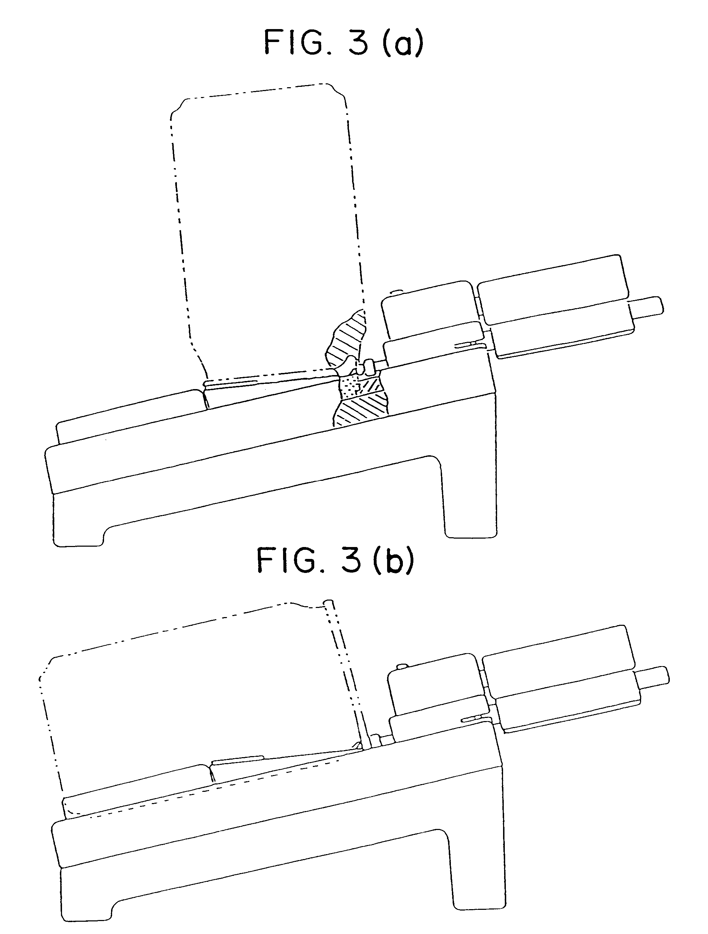

Firstly, an explanation will be made of the structure of the instantly claimed measuring instrument of dimensions of a can seam portion on the basis of the accompanying drawings. Figure 1 is a side view of the entire measuring instrument. Figure 2 is a perspective view of the entire measuring instrument. Figure 3-(a) and 3-(b) are a side view at the time of measuring can seaming thickness T and can seaming width W.

In Figs. 1 and 2, 1 denotes a stand having a slant upper face; 2, a measuring stand which is fastened to the base 1 by means of a bolt 3. Said stand 1 and measuring stand 2 construct a supporting stand 20. On the upper face 21 of the groove 4 made in the measuring stand 2 are placed a measuring block 5, a can cap supporting 6 and a body supporting block 7 linearly. The measuring block 5 is fixed onto the measuring stand 2 by means of a bolt 8.

On the measuring block 5 are arranged a criterion measuring pin 9 against which the spot of a can to be measured is held and a linear gauge 10 for measuring the distance from said criterion measuring pin 9 in the following position. In the criterion measuring pin 9 its criterion face 22 is so fastened as to make a rectangular angle with the upper face 5a of the measuring block 5. And the linear gauge 10 is so fixed as to be in parallel with the upper face 5a of the measuring block 5 and as to be on the straight line of the criterion measuring pin 9 by means of bolt 11.

Further, the measuring spindle 12 of the linear gauge 10 reciprocates along the straight line L and is pressed in the direction of criterion measuring pin 9 by means of a spring 13 of the linear gauge 10 at a measuring pressure which is always constant. Its edge becomes higher than the criterion face 22 of the criterion measuring pin 9.

The upper face of the cap supporting block 6 constitutes the cap supporting face 6a which places the can with the can cap face (seam portion) downside. Part of the left and right portions of the cap supporting face 6a is provided with guide projections 6b circumferentially in pluralities conformable with the kind of can diameters. These guide projections 6b guide the can such that the diameter direction of the can cap will be identical with the above straight line L. Further, the center of the upper face is made in the form of groove 6c (Figure 2) to ensure that the can body may not contact at the time of measuring the can seaming width by placing the body lateral.

Further, the cap supporting face 6a is so designed that an angle ϑX (i.e. an angle of the cap supporting face 6a with the upper face 5a of the measuring part of the measuring block 5) equivalent to a slant angle e of the seaming thickness T of a can to be measured can be adjusted by means of an adjustment screw 17 and an angle adjustment shim 14 with a intersecting point of the upper face 5a of the measuring block 5 and the criterion face 22 of the criterion measuring pin 9 as a pivotal center.

The can body supporting block 7 is provided with an upper face 7a which is parallel to an upper face 11a of the shoulder of the measuring stand 2 and a V-letter groove 7b which supports the can body.

In the V-letter groove 7b its centerline is parallel to a central axis of the measuring spindle 12. Moreover, this groove is made in the form of a V-letter to insure that the can body face and the upper face 5a of the measuring part of the measuring block 5 become parallel to each together when the can is so placed that a lower face of the neck of the body of a can to be measured may touch the criterion face 22 of the criterion measuring pin 9. The size of the groove is determined by an outer diameter of the can body and an outer diameter of the neck of the can body. Accordingly, the can cap supporting block is exchangeable in response to the kind of cans different in this relation.

A wireless transmitter 15 is fastened to the measuring stand 2 and is connected to the linear gauge 10 via cable 16. This wireless transmitter comprises a circuit in which any data measured by the linear gauge 10 is indicated as a digital numerical value on the display 10a at the top face of the linear gauge 10 and this is outputted to the wireless transmitter 15 and then is transmitted to a data processor (not shown) with a receiving function by pressing a transmission switch 15a of the transmitter 15. In case of the linear gauge 10 and the wireless transmitter 15, a battery system is preferable.

Next, there will be explained a procedure of measurement made through the use of a measuring instrument of dimensions of a seam portion having the above structure.

First, at the time of measuring dimensions of can seaming thickness T, a slant angle ϑ of the seaming thickness T according to the kind of cans is measured and then an angle ϑX of the can cap supporting block 6 is so adjusted by means of the adjustment screw 17 and the angle adjustment shim 14 as to be identical with its angle. This brings the following two directions into agreement, i.e. a direction of measuring can seaming thickness T and a direction of movement (straight line L) of the measuring spindle 12. Successively, the can seam portion to be measured is faced down and the measuring point is held gently against the measuring spindle 12 thereby to force the can open and the measuring point is placed in the center of the guide projection 6b of the can cap supporting block 6 while being held between the measuring spindle and the criterion measuring pin 9. As a result, the seaming thickness T is measured by means of the linear gauge 10. Further, seaming thickness T dimensions at any optional point can be determined by rotating the can in the above state.

Secondly, at the time of measuring dimensions of can seaming width W, the can body supporting block 7 selected according to the kind of cans is disposed in the groove 4 of the measuring stand 2.

Successively, the can is faced lateral and can body is placed on groove 7b of supporting block 7, and then the seam measuring point is held gently against the measuring spindle 12 thereby to force this open and the measuring point is held between the measuring spindle and the criterion measuring pin 9. As a result, the seaming width W is measured by means of the linear gauge 10.

Whereby the seaming width W is determined in such state that a direction of measuring the can seaming width W and a direction of movement (straight line L) of the measuring spindle 12 agree with each other.

Further, seaming width dimensions at any optional point can be determined by rotating the can in the above state. These measuring data are indicated as digital numerical values on the display 10a at the top face of the linear gauge. After confirming its numerical value, the transmission switch 15a of the wireless transmitter 15 is pressed thereby to transmit its data signal to a data processor.

By repeating the above operation, it is possible to measure seaming thickness and width dimensions at any optional point and transmit its data.

As above, the present invention enables one to take a quick and exact measurement by a simple operation without requiring any skill, to save a labor of recording and to sharply reduce a period of time spent in the measurement.

Moreover, thanks to a simple structure, the claimed measuring instrument can answer to an exchange of molds for different cans having various sizes quickly and is small in the frequency of trouble. This can reproduce an extremely reliable accuracy of measurement.

Shown below is an explanation by arranging the instrument for measuring dimensions of a can seam portion which conforms with appropriate working examples of the present invention.

## Claims

1. An instrument for measuring dimensions of a can seam portion, characterized by comprising a criterion measuring pin (9), a linear gauge (10) provided with a measuring spindle (12) which is so supported as to be movable along straight line L in the direction of approaching said criterion measuring pin and in the direction of leaving said criterion measuring pin, a can cap supporting block (6) which holds the can such that the direction of measuring can seaming thickness T may be identical with the above straight line L and the inner face of the can seam portion may contact said criterion measuring pin, and a can body supporting block (7) which holds the can such that the direction of measuring can seaming width W may be identical with the above straight line L and the lower face of the can seam portion may contact said criterion measuring pin.

2. An instrument for measuring dimensions of a can seam portion according to claim 1 wherein said instrument comprises a measuring stand (20) having a slant upper face (21); a measuring block (5), the can body supporting block (7) and the can cap supporting block (6) are disposed on the upper face (21) of said measuring stand (20); and said linear gauge (10) is mounted on said measuring block (5).

3. An instrument for measuring dimensions of a can seam portion according to claim 2 wherein said criterion measuring pin (9) is fastened onto the measuring block (5) and the criterion face (22) of said pin (9) extends rectangularly to said measuring block (5).

4. An instrument for measuring dimensions of a can seam portion according to any of claims 1 to 3 wherein the above straightline (L) and upper face (21) of said measuring stand (20) are parallel to each other.

5. An instrument for measuring dimensions of a can seam portion according to any of claims 1 to 4 wherein said measuring spindle (12) is pressed in the direction of said criterion measuring pin (9) at a constant pressure.

6. An instrument for measuring dimensions of a can seam portion according to any of claims 1-5 wherein said can cap supporting block (6) has a groove, whereby the can held by said can body supporting block (7) does not contact.

7. An instrument for measuring dimensions of a can seam portion according to any of claims 1-6 wherein said can cap supporting block (6) has a cap supporting face (6a) which holds the can cap; said cap supporting face (6a) has guide projections (6b) provided in pluralities circumferentially, thereby making it possible to hold plural kinds of cans so that these guide projections (6b) guide the can such that the diameter direction of the can cap will be identical with the above straight line (L).

8. An instrument for measuring dimensions of a can seam portion according to claim 7 wherein a slant angle of cap supporting face (6a) of said can cap supporting block (6) is adjustable.

9. An instrument for measuring dimensions of a can seam portion according to claim 1 wherein said can body supporting block (7) is disposed on the upper face (21) of said supporting stand (20) removably.

10. An instrument for measuring dimensions of a can seam portion according to any of claims 1-9 wherein there is provided a wireless transmitter (15) for transmitting data as measured by said linear gauge (10).

## Patentansprüche

1. Gerät zum Messen der Abmessungen einer Falznaht einer Blechdose,
**gekennzeichnet,**
durch einen Bewertungsmeßstift (9),
durch ein Linearmeßgerät (10) mit einer Meßspindel (12), die so gelagert ist, daß sie längs einer Geraden (L) in Richtung des Annäherns an den Bewertungsmeßstift und in Richtung des Entfernens vom Bewertungsmeßstift bewegbar ist,
durch einen Dosendeckeltragblock (6), der die Blechdose so hält, daß die Meßrichtung für die Falznahtdicke (T) identisch mit der genannten Geraden (L) ist und die Innenfläche der Falznaht der Blechdose den Bewertungsmeßstift berühren kann, und durch einen Dosenkörpertragblock (7), der die Blechdose so hält, daß die Meßrichtung für die Dosenfalzbreite (W) identisch mit der genannten Geraden (L) sein kann und die Unterseite der Dosenfalznaht den Bewertungsmeßstift berühren kann.

2. Gerät zum Messen der Abmessungen einer Falznaht einer Blechdose nach Anspruch 1, wobei das Gerät einen Meßständer (20) mit einer geneigten Oberseite (21) enthält, wobei ein Meßblock (5), der Dosenkörpertragblock (7) und der Dosendeckeltragblock (6) auf der Oberseite (21) des Meßständers (20) angeordnet sind und das Linearmeßgerät (10) auf dem Meßblock (5) montiert ist.

3. Gerät zum Messen der Abmessungen der Falznaht einer Blechdose nach Anspruch 2, wobei der Bewertungsmeßstift (9) auf dem Meßblock (5) befestigt ist und sich die Bewertungsfläche (2) dieses Stifts (9) im rechten Winkel zum Meßblock (5) erstreckt.

4. Gerät zum Messen der Abmessungen der Falznaht einer Blechdose nach einem der Ansprüche 1, 3, wobei die obige Gerade (L) und die Oberseite (21) des Meßständers (20) zueinander parallel sind.

5. Gerät zum Messen der Abmessungen der Falznaht einer Blechdose nach einem der Ansprüche 1-4, wobei die Meßspindel (12) mit konstantem Druck in Richtung des Toleranzmeßstifts (9) gedrückt wird.

6. Gerät zum Messen der Abmessungen der Falznaht einer Blechdose nach einem der Ansprüche 1-5, wobei der Dosendeckeltragblock (6) eine Nut aufweist, durch die die durch den Dosenkörpertragblock (7) gehaltene Blechdose nicht anliegt.

7. Gerät zum Messen der Abmessungen der Falznaht einer Blechdose nach einem der Ansprüche 1-6, wobei der Dosendeckeltragblock (6) eine den Dosendeckel haltende Deckeltragfläche (6a) aufweist, und wobei die Deckeltragfläche (6a) mehrere am Umfang angeordnete Führungsvorsprünge (6b) hat, durch die das Halten von mehreren Arten von Blechdosen möglich ist, so daß diese Führungsvorsprünge (6b) die Blechdose derart führen, daß die Durchmesserrichtung des Dosendeckels mit der genannten Geraden (L) identisch ist.

8. Gerät zum Messen der Abmessungen der Falznaht einer Blechdose nach Anspruch 7, wobei der Neigungswinkel der Deckeltragfläche (6a) des Dosendeckeltragblocks (6) einstellbar ist.

9. Gerät zum Messen der Abmessungen der Falznaht einer Blechdose nach Anspruch 1, wobei der Dosenkörpertragblock (7) auf der Oberseite (21) des Tragständers (20) abnehmbar angeordnet ist.

10. Gerät zum Messen der Abmessungen der Falznaht einer Blechdose nach einem der Ansprüche 1-9, wobei zur Übertragung der durch das Linearmeßgerät (10) gemessenen Daten ein drahtloser Geber (15) vorgesehen ist.

## Revendications

1. Instrument pour mesurer les dimensions d'un bourrelet de jointure d'une boîte métallique, caractérisé en ce qu'il comprend une broche de mesure de critères (9), une jauge linéaire (10) prévue avec un axe de mesure (12), qui est supporté de façon à être déplaçable suivant la ligne droite L dans la direction de l'approche de ladite broche de mesure de critères et dans la direction de l'éloignement de ladite broche de mesure de critères, un bloc de support de couvercle de boîte métallique (6) qui maintient la boîte métallique de sorte que la direction de la mesure de l'épaisseur du bourrelet de jointure de la boîte métallique T peut être identique à la ligne droite ci-dessus L et la face interne du bourrelet de jointure de la boîte métallique peut venir en contact avec ladite broche de mesure de critères et un bloc de support de corps de boîte métallique (7) qui maintient la boîte métallique de sorte que la direction de mesure de la largeur de bourrelet de jointure de la boîte métallique W peut être identique à la ligne droite ci-dessus L et la face inférieure du bourrelet de jointure de boîte métallique peut venir en contact avec ladite broche de mesure de critères.

2. Instrument pour mesurer les dimensions d'un bourrelet de jointure d'une boîte métallique selon la revendication 1, dans lequel ledit instrument comprend un bâti de mesure (20) ayant une face supérieure inclinée (21), un bloc de mesure (5), le bloc de support de corps de boîte métallique (7) et le bloc de support de couvercle de boîte métallique (6) sont disposés sur la face supérieure (21) dudit bâti de mesure (20) et ladite jauge linéaire (10) est montée sur ledit bloc de mesure (5).

3. Instrument pour mesurer les dimensions d'un bourrelet de jointure d'une boîte métallique selon la revendication 2, dans lequel ladite broche de mesure de critère (9) est fixée sur le bloc de mesure (5) et la face de critère (22) de ladite broche (9) se prolonge rectangulairement par rapport audit bloc de mesure (5).

4. Instrument pour mesurer les dimensions d'un bourrelet de jointure d'une boîte métallique selon l'une quelconque des revendications 1 à 3 dans lequel la ligne droite ci-dessus (L) et la face supérieure (21) dudit bâti de mesure (20) sont mutuellement parallèles.

5. Instrument pour mesurer les dimensions d'un bourrelet de jointure d'une boîte métallique selon l'une quelconque des revendications 1 à 4, dans lequel ledit axe de mesure (12) est pressé dans la direction de ladite broche de mesure de critère (9) à une pression constante.

6. Instrument pour mesurer les dimensions d'un bourrelet de jointure d'une boîte métallique selon l'une quelconque des revendications 1 à 5, dans lequel ledit bloc de support de couvercle de boîte métallique (6) comporte une rainure, d'où il résulte que la boîte métallique maintenue par ledit bloc de support du corps de boîte métallique (7) ne vient pas en contact.

7. Instrument pour mesurer les dimensions d'un bourrelet de jointure d'une boîte métallique selon l'une quelconque des revendications 1 à 6, dans lequel ledit bloc de support de couvercle de boîte métallique (6) comporte une face de support de couvercle (6a) qui maintient le couvercle de la boîte métallique, ladite face de support du couvercle (6a) comporte des saillies de guidage (6b) prévues en un nombre important circonférentiellement, faisant de ce fait qu'il est possible de maintenir plusieurs types de boîtes métalliques de sorte que ces saillies de guidage (6b) guident la boîte métallique de sorte que la direction du diamètre du couvercle de la boîte métallique sera identique à la ligne droite ci-dessus (L).

8. Instrument pour mesurer les dimensions d'un bourrelet de jointure d'une boîte métallique selon la revendication 7, dans lequel un angle d'inclinaison de la face de support du couvercle (6a) dudit bloc de support du couvercle de boîte métallique (6) est ajustable.

9. Instrument pour mesurer les dimensions d'un bourrelet de jointure d'une boîte métallique selon la revendication 1, dans lequel ledit bloc de support du corps de boîte métallique (7) est disposé de manière amovible sur la face supérieure (21) dudit bâti de support (20).

10. Instrument pour la mesure des dimensions d'un bourrelet de jointure d'une boîte métallique selon l'une quelconque des revendications 1 à 9, dans lequel il est prévu un émetteur radio (15) pour émettre les informations comme mesurées par ladite jauge linéaire (10).
